# EUROPÄISCHE PATENTSCHRIFT

(11) **EP 2 176 097 B1**
(45) Veröffentlichungstag und Bekanntmachung des Hinweises auf die Patenterteilung: **21.03.2018**
(21) Anmeldenummer: 08786824.6
(22) Anmeldetag: 04.08.2008
(51) Int. Cl.: B01D 46/02, B01D 46/24, B01D 46/52, F02M 35/024, B01D 46/00

(54) **FILTERELEMENT UND FILTERANORDNUNG**
FILTER ELEMENT AND FILTER ARRANGEMENT
ELÉMENT FILTRANT ET SYSTÈME FILTRANT

(30) Priorität: 08.08.2007 DE 202007011096 U
(43) Veröffentlichungstag der Anmeldung: 21.04.2010
(73) Patentinhaber: MANN+HUMMEL GmbH, 71636 Ludwigsburg (DE)
(72) Erfinder: WALZ, Stefan, 71691 Freiberg (DE); BECK, Andreas, 74366 Kirchheim (DE); WALTENBERG, Klaus, 71723 Grossbottwar (DE); PELZ, Andreas, 70806 Kornwestheim (DE); MOSER, Nikolaus, 71254 Ditzingen (DE); KOSICKI, Jürgen, 74391 Erligheim (DE); LAMPERT, Johannes, 84032 Landshut (DE); THIENEL, Michael, 95349 Thurnau (DE); ZBIRAL, Robert, 71672 Marbach (DE); TESCHNER, Matthias, 71636 Ludwigsburg (DE)
(86) Internationale Anmeldenummer: PCT/EP2008/060211
(87) Internationale Veröffentlichungsnummer: WO 2009/019244

(56) Entgegenhaltungen:
- DE-A1-102004 054 274
- DE-A1-102005 051 676
- GB-A- 2 131 319
- US-A1- 2003 089 233

## Beschreibung

### Technisches Gebiet

Insbesondere im Kraftfahrzeugbereich ist es notwendig, die zur Verbrennung von Kraftstoffen benötigte Luft vor der Zuführung in die Brennkraftmaschine zu reinigen. Dies erfolgt in der Regel durch Luftfilter, welche dem jeweiligen Verbrennungsluftansaugrohr vorgebaut sind. Dabei ist es oft wegen begrenzter räumlicher Ressourcen gewünscht, eine besonders kompakte Anordnung zu schaffen. Ferner soll ein Austausch von verschmutzten Filtern leicht möglich sein.

### Stand der Technik

Meistens werden entsprechende Luftfilteranordnungen auf dem Motorblock oder karosseriefest unter der Motorhaube angeordnet. Gesetzliche Auflagen zwingen die Fahrzeughersteller zum Fußgängerschutz zwischen der Motorhaube und festen Einrichtungen im Motorraum, wie beispielsweise dem Motorblock, Raum zu lassen. Dieser meist nicht genutzte Zwischenraum soll den Aufprall, beispielsweise eines Körpers, der die Motorhaube eindrückt, sanft abbremsen. Andererseits ist es auch gewünscht, den vorliegenden Raum im Motorraum möglichst effizient auszunutzen und mit funktionellen Einheiten zu versehen. Eine Möglichkeit ist zum Beispiel die Anordnung eines Luftfilters. In der Vergangenheit sind jedoch Luftfilteranordnungen im Motorraum derart starr und stabil ausgeführt worden, dass ein ausreichender Abstand zur Motorhaube wegen des Fußgängerschutzes notwendig war.

Aus der WO 2005/095783 ist zum Beispiel ein Ansaugfilter bekannt, der auf der Unterseite der Motorhaube eines Fahrzeugs angeordnet ist. Dabei ist ein Filtermedium aus einem schlauchförmigen Körper in einer mit der Motorhaube verbundenen luftdichten Abdeckung vorgesehen. Die zu verbrennende Rohluft wird dabei in den unter der Motorhaube vorliegenden Hohlraum eingeführt und als Reinluft aus dem Inneren des Filterelements über einen Verbindungsschlauch dem Verbrennungsmotor zugeführt.

Nachteilig sind dabei eine Erhöhung des Gewichts der Motorhaube sowie das benötigte Volumen zwischen Motorhaube und dem Motorraum des Fahrzeugs. Durch die zusätzlichen Elemente, welche in die Motorhaube integriert sind, kann sich dies auch negativ auf einen Fußgängerschutz auswirken, da eine Verformung beim Auftreffen von Gegenständen auf die Motorhaube erschwert wird.

Weitere gattungsgemäße Filteranordnungen sind beispielsweise aus der DE 10 2005 05676 und der DE 10 2004 054 274 bekannt.

Es ist daher eine Aufgabe der vorliegenden Erfindung, eine verbesserte Filteranordnung zu schaffen.

### Offenbarung der Erfindung

Diese Aufgabe wird durch ein Filterelement mit den Merkmalen des Patentanspruchs 1 gelöst.

Demgemäß ist ein Filterelement vorgesehen, welches einen Fußabschnitt und einen Endabschnitt aufweist, wobei zwischen dem Fußabschnitt und dem Endabschnitt ein schlauchförmiger Innenraum von einem fluiddurchlässigen Filtermaterial umschlossen ist. Der Fußabschnitt weist zum Ein- und Ausströmen von Fluid eine Filterelementöffnung und Kopplungsmittel zum fluiddichten Ankoppeln eines Filterelementes an eine Trägerplatte mit einer geeigneten Trägeröffnung auf. Dabei sind der Fußabschnitt und/oder das Kopplungsmittel derart ausgestaltet, dass das Filterelement bei Vorliegen einer externen auf das Filterelement wirkenden Kraft in eine vorgegebene Richtung abgeknickt wird.

Unter Abknicken wird verstanden, dass das Filterelement beispielsweise an seinem Fuß, der auf einer Trägerplatte einer entsprechenden Filterhalterung oder eines Filtergehäuses anliegt, zum Beispiel aufgrund einer Hebelwirkung abgelöst wird und sich das Filterelement dann im Wesentlichen parallel zu der Trägerplatte anordnet. Dadurch wird ein Volumen freigegeben, welches im Unglücksfall von beispielsweise einer eingedrückten Motorhaube eingenommen werden kann. Es ist auch möglich, dass wegen einer schrägen Anordnung des rohrförmigen Filterinnenraums nur das Material seitlich in eine von der Neigung des Filterelements in die vorgegebene Richtung umgelegt wird und Raum freigibt.

Der Fuß- und/oder der Endabschnitt weisen vorzugsweise ein derart flexibles Material auf, dass das Filterelement bei Vorliegen der externen Kraft mit einer vorgegebenen Stärke zusammendrückbar ist. Das heißt, im Unfallsfall, wenn durch einen Aufprall Kräfte auf das Filterelement wirken, die bei üblichen Betriebsbedingungen nicht vorliegen, bzw. bei normaler Fahrt treten lediglich geringere äußere Kräfte auf, ist das Filterelement zusammenstauchbar und kollabiert. Dadurch wird insbesondere im Hinblick auf den notwendigen Fußgängerschutz Volumen zum Abbremsen eines Aufpralls freigegeben.

Das Filterelement ist zum Beispiel mit einem im Wesentlichen zylindrischen oder kegelförmigen Innenraum ausgeführt. Das Filterelement weist eine Längsachse auf, wobei der Fußabschnitt mit der Längsachse einen Winkel zwischen 5 und 45 Grad aufweist. Durch den somit schrägen Fußabschnitt wird durch den Winkel eine Abknickrichtung vorgegeben, in die das Filterelement zum Beispiel abreißt und zum Fußgängerschutz benötigten Raum freigibt. Der Fuß- und/oder der Endabschnitt können dabei eine kreisförmige oder elliptische Form haben. Denkbar sind jedoch auch Polygone als Grundflächen. Der Fuß- und der Endabschnitt können auch im Wesentlichen parallel zueinander angeordnet sein.

Das Filtermaterial, wie zum Beispiel flexibles Vliesmaterial mit Kunststofffasern hat vorzugsweise zwischen dem Fußabschnitt und dem Endabschnitt Längsfaltungen. Dies dient der Vergrößerung der Filteroberfläche. Ferner können Querfaltungen vorgesehen werden. Es können dabei zum Beispiel im Innenraum des Filterelementes Stützmittel, wie gerüstartige Streben vorgesehen sein, welche die Form oder die Faltungen des Filtermaterials stützen. Die Stützmittel weisen vorzugsweise Sollbruchstellen auf. Damit wird auch gewährleistet, dass das Filterelement im Betrieb einem ausreichenden Druckunterschied zwischen Innenraum und Außenraum widersteht, aber dennoch im Unglücksfall leicht zusammengepresst werden kann und einen Körper sanft bremst.

Der Fuß- und/oder der Endabschnitt weisen vorzugsweise flexibles Kunststoffmaterial, wie z. B. Polyurethan (PUR)-Schaum auf. PUR-Schaum oder flexibles Kunststoffmaterial dient dabei einerseits dem Abdichten am Endabschnitt und kann gleichzeitig am Fußabschnitt eine fluiddichte Abdichtung mit der Trägerplatte des jeweiligen Filtergehäuses gewährleisten.

Die Kopplungsmittel können beispielsweise ein Schnappbajonett und/oder Schraubverschluss zum dichtschlüssigen Verbinden mit der Trägerplatte aufweisen. Beispielsweise kann der Fußabschnitt das Filtermaterial und/ oder die Stützmittel miteinander spiegelgeschweißt sein.

Die Erfindung betrifft weiterhin eine Filteranordnung mit den Merkmalen des Patentanspruchs 7, mit einer Aufnahmeeinrichtung für mindestens ein Filterelement mit den Merkmalen des Patentanspruchs 1.

Dabei ist die Aufnahmeeinrichtung für mindestens ein Filterelement mit einer Zwischenwand ausgestattet, wobei die Zwischenwand geeignet ist, ein daran gekoppeltes Filterelement derart aufzunehmen, dass die Oberfläche der Zwischenwand und des Filterelementes eine geschlossene Grenzfläche bilden. Die Grenzfläche trennt dabei einen Rohfluidbereich von einem Reinfluidbereich der Aufnahmeeinrichtung. Die Zwischenwand weist dabei mindestens eine Sollbruchstelle auf.

Die Aufnahmeeinrichtung ist zum Beispiel mit mehreren Sollbruchstellen versehen, die so angeordnet sind, dass im Unglücksfall die eingesetzten und/oder angekoppelten Filterelemente in vorgegebene Richtungen ausweichen und zum Beispiel komprimiert werden. Dadurch wird zum Fußgängerschutz ein Volumen freigegeben, wenn von außen auf die Aufnahmeeinrichtung ein Druck oder eine Kraft wirken.

Als Sollbruchstelle soll nicht zwingend ein Wandungsbereich verstanden werden, der durch ein Einreißen oder Brechen zerstört wird. Im Grenzfall von sehr dünnen oder flexiblen Materialien für die Zwischenwand ist die gesamte Wandung nachgiebig ab einer bestimmten Krafteinwirkung. Insofern kann die gesamte Wandung als Sollbruchstelle verstanden werden.

Als Sollbruchstelle kommen zum Beispiel Zwischenwandbereiche in Frage, deren Wanddicke verringert sind. Die Sollbruchstelle kann auch in der Art eines Filmscharniers ausgeführt werden, wobei zwei Gehäusewandteile aneinandergrenzen, die über einen dünnen Filmstreifen, beispielsweise aus Kunststoff miteinander flexibel verbunden sind. Die Sollbruchstelle kann ferner durch eine Verformung der Zwischenwand, insbesondere durch Wölben, Knicken und/oder Falten gebildet sein. Durch Knicke oder eine stufenförmige Ausführung der Gehäusewand bzw. der Zwischenwand ergeben sich an den Knicken in der Regel eine Verjüngung und ein weniger belastbarer Bereich. Die Zwischenwand kann zum Beispiel teilweise ein zickzackförmiges Profil aufweisen, das ziehharmonikaförmig bei genügend großer Kraftanstrengung von außen zusammengedrückt wird.

Die Zwischenwand ist vorzugsweise mit einer Zwischenwandöffnung ausgestattet, welche ein Kopplungsmittel zum Verbinden an einen Fußabschnitt eines Filterelements mit einer Filterelementöffnung aufweist. Als Kopplungsmittel kommen die auch bereits zuvor genannten Schnapp-, Bajonett- oder Schraubverschlüsse zum dichtschlüssigen Verbinden mit der Trägerplatte in Frage. Mindestens eine Sollbruchstelle schneidet dabei die Zwischenwandöffnung. In diesem Fall kann die Eigenschaft eines zum Beispiel vorbeschriebenen Filterelementes, welches in eine vorgegebene Richtung abknickt, durch die Sollbruchstelle unterstützt werden. In einer besonders bevorzugten Ausführungsform ist die Aufnahmeeinrichtung zur Aufnahme mehrerer Filterelemente ausgestaltet und die Zwischenwand weist mehrere Sollbruchstellen auf.

Die Aufnahmeeinrichtung kann optional ferner einen Aufnahmekörper und eine Abdeckhaube aufweisen. Dabei kann der Reinluftbereich zum Beispiel ein Volumen zwischen der Grenzfläche und einer Wandung des Aufnahmekörpers umfassen. In diesem Fall durchströmt zu reinigende Luft oder Fluid die Aufnahmeeinrichtung von der Seite der Abdeckhaube und strömt bei einer geeigneten Öffnung des Aufnahmekörpers als Reinluft aus.

Die Erfindung liefert ferner eine Filteranordnung in einem Motorraum, mit mindestens einem Filterelement wie vorbeschrieben und einer entsprechenden Aufnahmeeinrichtung.

Weitere vorteilhafte Ausgestaltungen der Erfindung sind Gegenstand der Unteransprüche sowie der im Folgenden beschriebenen Ausführungsbeispiele der Erfindung.

### Kurze Beschreibung der Zeichnungen

Im Folgenden wird die Erfindung anhand bevorzugter Ausführungsbeispiele der Erfindung unter Bezugnahme auf die beigelegten Figuren näher erläutert. Es zeigt dabei:
- Fig. 1: eine perspektivische und eine Querschnittsansicht einer ersten Ausführungsform eines Filterelementes;
- Fig. 2: eine perspektivische Ansicht einer zweiten Ausführungsform eines Filterelementes;
- Fig. 3: Querschnittsansichten möglicher Formen von Filterelementen;
- Fig. 4: eine Querschnittsansicht einer ersten Ausführungsform einer Filteranordnung;
- Fig. 5: Querschnittsansichten möglicher Ausführungsformen von Zwischenwänden bzw. Trägerplatten;
- Fig. 6: eine perspektivische Ansicht einer Ausführungsform einer Trägerplatte mit Filterelementen;
- Fig. 7: eine Querschnittsansicht einer Aufnahmeeinrichtung für Filterelemente.

In den Figuren sind gleiche bzw. funktionsgleiche Elemente mit gleichen Bezugszeichen versehen worden, sofern nichts anderes angegeben ist. Ausführungsform(en) der Erfindung

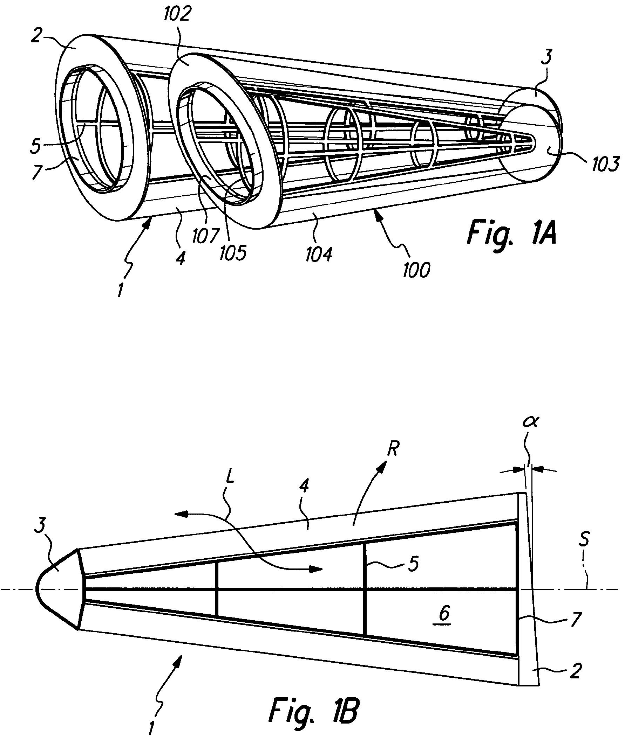

Figur 1A zeigt eine erste Ausführungsform eines Filterelementes in perspektivischer Ansicht. Dabei sind in der Figur 1A zwei Filterelemente 1, 100 dargestellt. Das jeweilige Filterelement 1, 100 weist einen Fußabschnitt 2, 102 und einen Endabschnitt 3, 103 auf. Zwischen dem Fußabschnitt 2, 102 und dem Endabschnitt 3, 103 verläuft zum Beispiel entlang einer entsprechenden Symmetrieachse des Filterelementes 1, 100 gefaltetes Filtermaterial 4, 104.

Figur 1B zeigt eine entsprechende Querschnittsansicht eines Filterelementes 1. Im Innenraum 6 des Filterelementes 1 sind gerüstartige, Kunststoffstreben 5 angeordnet, die die Form des Filtermaterials 4 stützen und stabilisieren.

Der jeweilige Fußabschnitt 5, 105 ist in dem Ausführungsbeispiel der Figur 1A kreisförmig ausgeführt und hat im Inneren eine Öffnung 7, 107 durch die Fluid in den Innenraum 6 des Filterelementes 1 ein- oder ausströmen kann. In der Querschnittsansicht in der Figur 1B ist beispielsweise durch Pfeile L angegeben, wie beispielsweise zu filternde Luft durch das Filterelement 1 durchtritt. Es ist einerseits denkbar, dass Rohluft durch die Öffnung 7 in den Innenraum 6 eintritt und als Reinluft in den Außenraum gelangt. Andererseits kann die Filterrichtung entgegengesetzt vorliegen, wobei Rohluft von außen durch das Filtermaterial 4 in den Innenraum 6 einströmt und von dort als Reinluft abgegriffen werden kann.

Der jeweilige Fußabschnitt 2, 102 ist derart ausgestaltet, dass das Filterelement, wenn es in eine geeignete Trägeröffnung eingesetzt ist, nicht mit seiner Symmetrieachse S senkrecht davon absteht, sondern um einen Winkel α geneigt ist. Dadurch wird eine Richtung vorgegeben, in die das Filterelement 1 umknickt, sofern eine externe äußere Kraft beispielsweise auf den Mantel aus Filtermaterial 4 wirkt. Durch diese vorgegebene Abknickrichtung, welche am Beispiel der Figur 1B im Wesentlichen entlang des geschwungenen Pfeils R verläuft, kann beim Einbau des Filterelementes 1 festgelegt werden, welcher Raum beispielsweise bei einem Unfall von dem Filterelement freigegeben werden soll. Ferner kann der Endabschnitt 3 und der Fußabschnitt 2 aus einem derart geschäumten Kunststoffmaterial ausgeführt werden, dass selbst die Endabschnitte 3 und der Fußabschnitt 2 flexibel zusammendrückbar sind. Dann ist es auch möglich den Winkel α auf 0 Grad, so dass die Symmetrieachse S mit der entsprechenden Fläche einer Halteplatte senkrecht verläuft, auszurichten, da vorzugsweise das Filtermaterial flexibel ist und die Stützen 5 nur derart stabil ausgeführt sind, dass bei besonders großen externen Kräften das gesamte Filterelement 1 kollabieren kann und damit die Gefahr im Fall eines Unfalls reduziert ist.

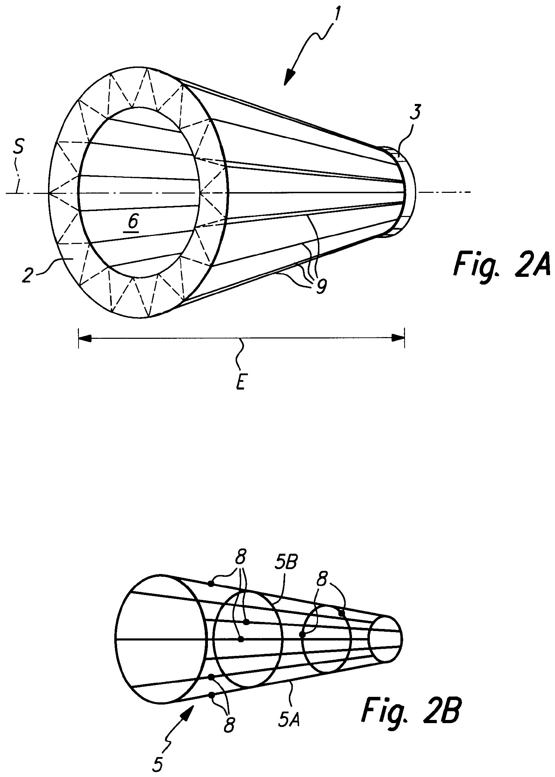

In Figur 2 sind weitere Ausführungsbeispiele perspektivisch dargestellt. Dabei zeigt die Figur 2A ein Filterelement 1, welches Längsfaltungen 9 aufweist, von denen nur einige mit dem Bezugszeichen 9 versehen sind, die zwischen dem entsprechenden Endabschnitt 3, welcher beispielsweise aus einem Schaumstoff gebildet sein kann, und dem Fußabschnitt 2 verlaufen. Die Längsfaltungen 9 sind beispielsweise durch den Fußabschnitt 2, welcher vorzugsweise aus einem Schaummaterial wie PUR-Schaum gebildet ist, stabilisiert.

Der Doppelpfeil E zeigt die longitudinale Ausdehnung des Filterelementes 1 an. In das Innere des Filterelementes 1 kann zur weiteren Stabilisierung ein Stützgerüst, wie es in der Figur 2B dargestellt ist, eingeführt werden. Das Stützgerüst 5 ist aus Längsstreben 5A und Querstreben 5B aufgebaut, wobei die Querstreben 5B zum Beispiel kreisförmig ausgeführt sind. Damit das gesamte Filterelement 1 auch quer zusammengedrückt werden kann und damit im Unfallsfall den Anforderungen des Fußgängerschutzes genügt, ist das Stützgerüst 5 mit Sollbruchstellen 8 versehen. Diese sind derart ausgestaltet, dass einerseits das Filterelement 1 eine genügende Steifigkeit gegenüber einer Druckdifferenz in dem Innenraum 6 und dem Außenraum aufweist, jedoch bei extern im Unfallsfall auftretenden Kräften nachgibt.

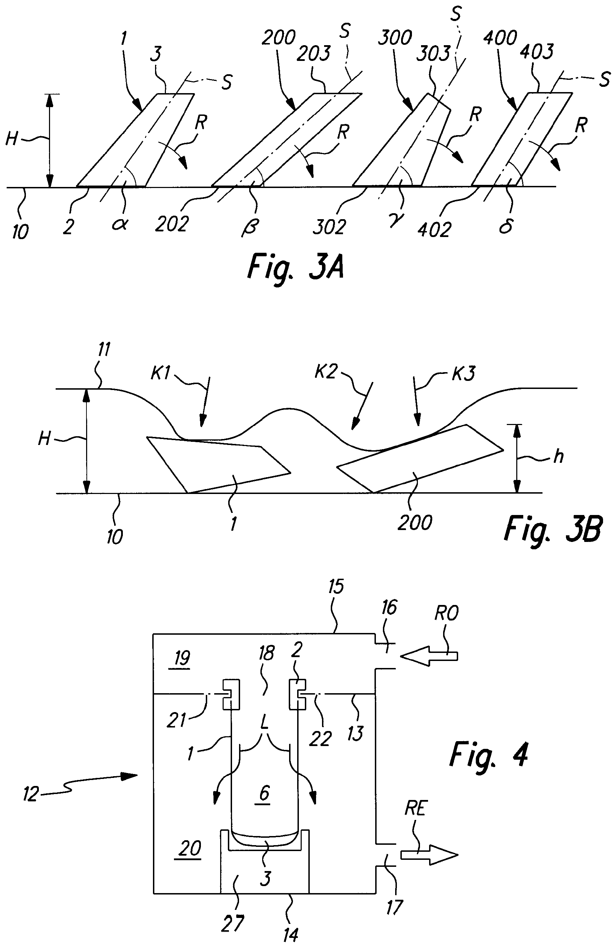

In der Figur 3 sind mögliche Formen von Filterelementen im Querschnitt dargestellt. Dabei sind im Wesentlichen röhrenförmige Filterelemente 1, 200, 300, 400 an einer Trägerplatte 10 mit ihren Fußabschnitten 2, 202, 302, 402 angekoppelt. Die Trägerplatte 10 kann beispielsweise Teil einer Zwischenplatte oder Zwischenwand einer entsprechenden Gehäuseform sein.

Die Filterelemente 1, 200, 300, 400 haben jeweils eine Symmetrieachse S und einen Endabschnitt 3, 203, 303, 403. Dabei weisen die Fußabschnitte 202, 302, 402 einen Winkel α, β, γ, δ mit der jeweiligen Symmetrieachse S auf. Je kleiner dieser Winkel ist, desto stärker ist eine Umknickrichtung R vorgegeben. In den Querschnitten der Filterelemente der Figur 3A, haben die Filterelemente 1, 200 jeweils zueinander parallele Fuß- und Endabschnitte 2, 3, 202, 203. Bei einer entsprechend flexiblen Ausführung der Filterelemente und insbesondere der Fußabschnitte ist es auch möglich, dass die Filterelemente durch die äußere Kraft selbst zusammengestaucht werden.

Falls nun durch äußere Einwirkung, beispielsweise eine zusammengedrückte Motorhaube, im Verkehrsunfall äußere Kräfte wie in der Figur 3B aus der Richtung K1, K2, K3 wirken, geben die Filterelemente 1, 200 Raum frei. In Figur 3A ist eine Höhe H für die Filterelemente 1, 200, 300, 400 angegeben. In der Figur 3B ist durch die geschwungene Kurve 11 eine eingedrückte Motorhaube angedeutet. Es wirken entsprechende Kräfte K1, K2, K3 auf die Motorhaube 11 bzw. die darunter vorgesehenen Filterelemente 1, 200.

Durch die Winkel α, β, γ, δ der Fußabschnitte 2, 202, 303, 401 mit der jeweiligen Symmetrieachse S ist die Umknickrichtung R vorgegeben. In Figur 3B ist der Endzustand nach einem Eindrücken der Motorhaube 11 dargestellt. Die Höhe H ist durch das Umknicken der Filterelemente, wovon nur zwei dargestellt sind, erheblich reduziert. Damit ergibt sich die Freigabe eines Volumens, welches von der Differenz zwischen der Höhe H und h abhängt.

In Figur 4 ist eine Filteranordnung mit einem Filterelement und einem Gehäuse im Querschnitt dargestellt. Die Filteranordnung 12 weist ein Filtergehäuse oder eine Aufnahmeeinrichtung 13, 14, 15 auf. Die Aufnahmeeinrichtung weist dabei eine Zwischenwand 13 auf, die eine Öffnung 18 hat, in die beispielsweise ein Fußabschnitt 2 eines Filterelementes 1 einsetzbar ist. Dabei sind Kopplungsmittel, wie beispielsweise Schnallen, Schrauben oder Bajonettverschlüsse denkbar.

Die Aufnahmeeinrichtung hat ferner einen Filteraufnahmekörper 14, der eine Abströmöffnung 17 für gereinigte Luft RE aufweist. Ferner hat die Filteranordnung 12 bzw. die Aufnahmeeinrichtung eine Haube 15 mit einer Rohluftöffnung 16, durch die unreine Luft RO einströmt. Durch die Grenzfläche, welche aus der Zwischenwand 13 und dem Filterelement 1 bzw. dessen Oberfläche gebildet wird, ergibt sich ein Reinluftbereich 20 und ein Rohluftbereich 19, der auch den Innenraum 6 des Filterelementes 1 umfasst. Die Luftströmung ist beispielhaft durch die Pfeile L dargestellt. Die Zwischenwand 13 weist Sollbruchstellen 21, 22 auf. Weitere Sollbruchstellen können beispielsweise an den übrigen Gehäusewandungen 14, 15 vorgesehen werden.

Der Aufnahmekörper 14 hat eine optionale Halterung 27, wobei zwischen der Halterung 27 und der Zwischenwandöffnung 18 das Filterelement 1 eingespannt werden kann. Insofern ist ein Dichtschluss zwischen dem Fußabschnitt 2 und der Zwischenwand 13 auch ohne zusätzliche Kopplungsmittel denkbar.

Die Wände des Aufnahmekörpers 14 und der Haube 15 können auch aus flexiblen Materialien, wie beispielsweise einem Kunststoffschaum ausgeführt werden. Dadurch lässt sich insgesamt die Filteranordnung leicht verformen bzw. eindrücken. Dies ist im Unfallsfall wichtig, damit zum Fußgängerschutz eine beispielsweise im Motorraum vorgesehene Filteranordnung 12 Raum frei gibt und ein sanftes Abbremsen des auftreffenden Körpers ermöglicht wird.

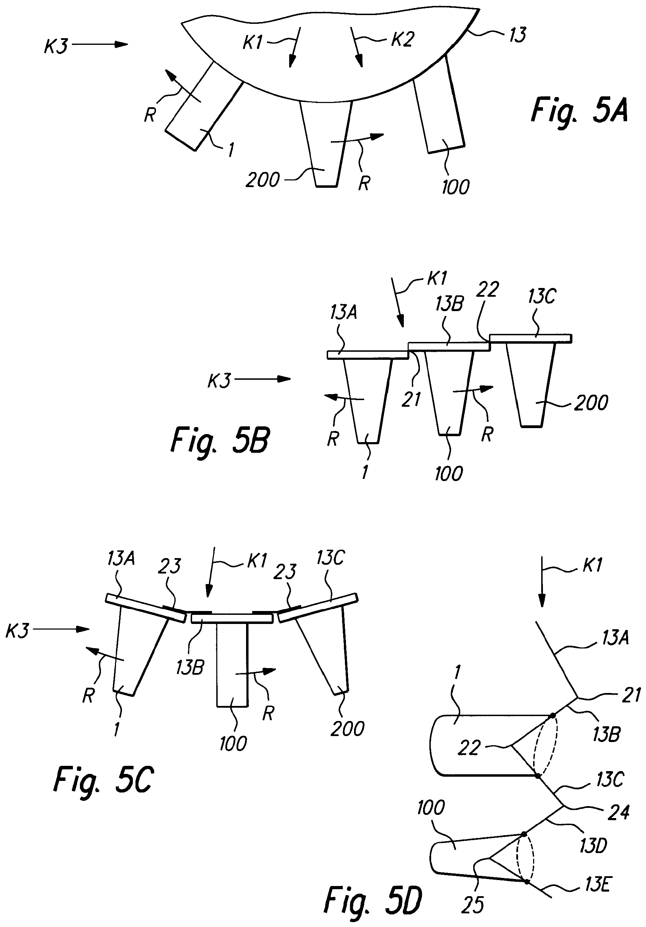

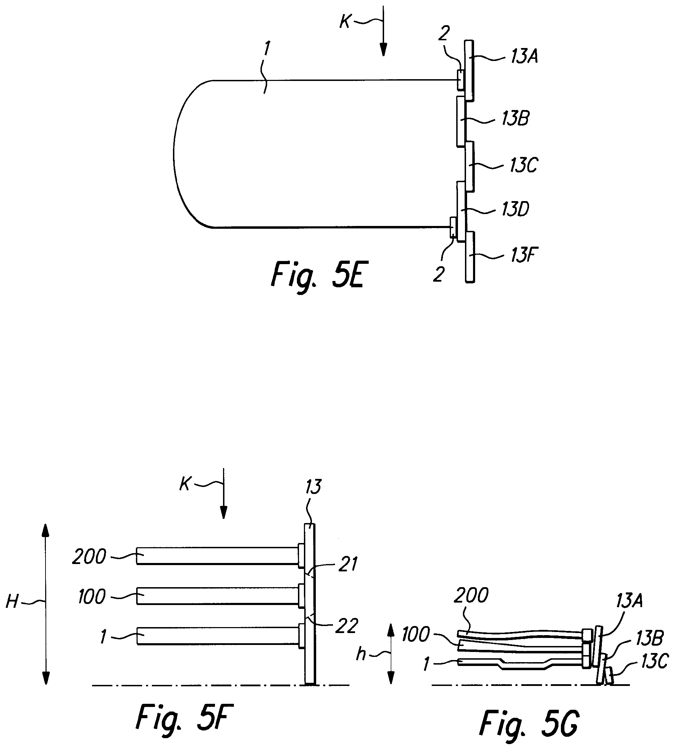

In der Figur 5 sind viele Möglichkeiten von Sollbruchstellen bzw. vorgebbaren Verformungen für Gehäuse und Zwischenwandungen angedeutet. In der Figur 5A ist beispielsweise eine Wölbung einer Zwischenwand 13 dargestellt. Die Filterelemente 1, 100, 200 sind nur schematisch dargestellt. Durch die Rundung der Zwischenwandung 13 ergibt sich beispielsweise bei Einwirkung von äußeren Kräften K1, K2 eine Bewegung der Filterelemente 1, 200 in die Richtung R. Somit geben die Filterelemente und insgesamt die mit einer derartigen Wandung ausgestatteten Filteranordnung Volumen frei.

In der Figur 5B ist eine zweite Ausführungsform von Sollbruchstellen 21 in einer Zwischenwand 13 dargestellt. Dabei besteht die Zwischenwand aus Segmenten 13A, 13B, 13C, die an ihren Grenzflächen 21, 22 eine besonders dünne Wanddicke aufweisen. Greift eine Kraft K1, etwa aus der Richtung wie sie in der Figur 5B durch den Pfeil K1 dargestellt ist an, ergibt sich ein Abknicken insgesamt in Richtung der Pfeile R der Filterelemente 1, 100.

Eine weitere Möglichkeit für Sollbruchstellen ist in der Figur 5C dargestellt. In Figur 5C sind ebenfalls Segmente 13A, 13B, 13C von Zwischenwandteilen verwendet, die jeweils ein angekoppeltes Filterelement 1, 100, 200 aufweisen. Die Übergänge zwischen den Segmenten 13A und 13B bzw. 13B und 13C sind durch Filmscharniere geschaffen, wobei eine jeweilige Folie 23 die Segmente miteinander verbindet. Greift eine äußere Kraft K1 auf die Zwischenwand 13A, 13B, 13C an, ergibt sich ein Zurückweichen der Filterelemente 1, 100 in Richtung der Pfeile R.

In Figur 5D ist noch eine Möglichkeit von Sollbruchstellen 21, 22, 24 25 näher erläutert. Die Zwischenwand 13 ist zickzackförmig oder ziehharmonikaförmig gefaltet. Die verschiedenen Faltungsabschnitte 13A - 13E sind daher an ihren jeweiligen Kanten geschwächt und bilden somit Sollbruchstellen 21, 22, 24, 25 aus. Sofern eine Kraft entlang des Pfeils K1 angreift, werden die Abschnitte 13A - 13E ziehharmonikaförmig zusammengedrückt welches durch die Faltkanten 21, 22, 24, 25 vereinfacht ist.

Eine weitere Möglichkeit besteht darin, dass die entsprechenden Gehäuse oder Zwischenwände 13 derart eingebaut sind, dass Kräfte gemäß der Pfeile K3 in den Figuren 5A - 5C wirken. Durch die Sollbruchstellen 21, 22, 23 ergibt sich auch dann ein Zurückweichen oder Zusammenstauchen der Zwischenwand 13.

Die Figur 5E zeigt eine mit Sollbruchstellen versehene Zwischen- oder Trägerwand 13A-13F, bei der ein Filterelement 1 zusammen mit der Trägerwand durch eine äußere Kraft K komprimierbar ist.

Es ist auch denkbar, dass, wie in Figur 5F und 5G gezeigt, mehrere Filterelemente kollabieren und eine Höhe H-h freigeben.

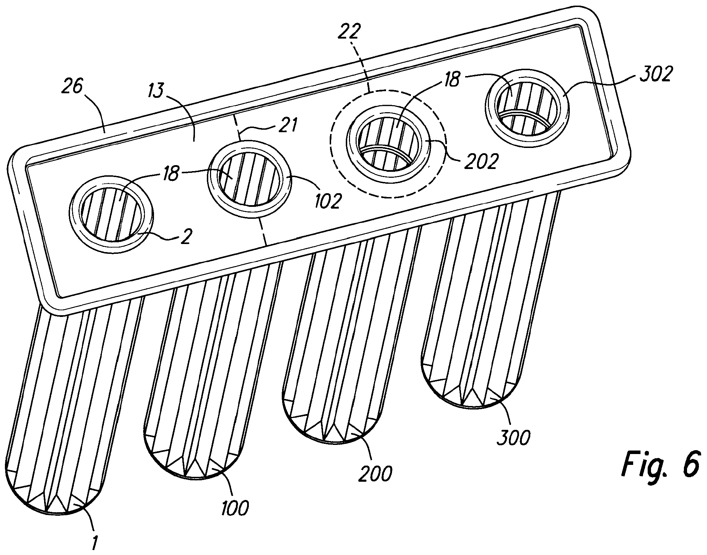

Die Figur 6 zeigt eine perspektivische Darstellung eines Teils einer Filteranordnung. Dabei sind zylindrische Filterelemente 1, 100, 200, 300 mit ihren jeweiligen Fußabschnitten 2, 102, 202, 303 in eine Trägerplatte 13 eingesetzt. Entsprechende Öffnungen 18 in der Trägerplatte 13 ermöglichen so einen Fluideinfluss oder -ausfluss aus dem Innenraum der Filterelemente 1, 100, 200, 300. Die Trägerplatte 13, welche als Zwischenwand in einer Aufnahmevorrichtung dienen kann, ist rechteckig geformt und hat eine umlaufende beispielsweise Kunststoffdichtung 26.

Ferner sind Berst- oder Sollbruchstellen 21, 22 vorgesehen, welche zu einem Bruch oder einer Verformung entlang der Sollbruchstellen 21, 22 der Trägerplatte 13 führen, wenn eine entsprechende Kraft beispielsweise durch eine Verformung einer Motorhaube auf die in Figur 6 dargestellte Anordnung ausgeübt wird. Dabei schneidet die Sollbruchstelle 21 eine Öffnung 18 der Trägerplatte 13. Die Sollbruchstelle 22 umschließt bzw. umläuft konzentrisch die Öffnung 18.

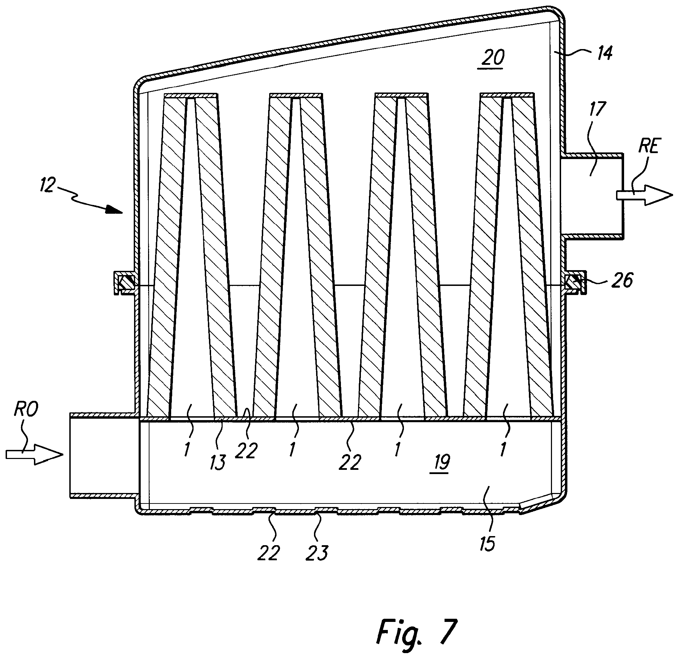

In Figur 7 ist eine Querschnittsansicht einer weiteren Filteranordnung 12 dargestellt. In Figur 7 ist eine Trägerplatte 13, welche als Zwischenwand eines Gehäuses dient, dargestellt. Dort sind Filterelemente 1, wie sie beispielsweise in Figur 6 dargestellt sind, eingesetzt. In Figur 7 ist der untere Bereich durch eine Haube 15 gebildet. Rohluft RO strömt in den Rohluftbereich 19, also den Zwischenraum zwischen der Haube 15 und der durch die Zwischenwand und die Oberfläche der Filterelemente 1 gebildeten Grenzfläche. Der Reinluftbereich 20 ist durch den Zwischenraum zwischen der vorgenannten Grenzfläche und der Wandung des Aufnahmekörpers 14 gebildet. An einer entsprechenden Öffnung 17 kann somit Reinluft RE abgegriffen werden. Die Haube 15 und der Aufnahmekörper 14 sind durch eine umlaufende Dichtung 26 luftdicht miteinander gekoppelt. In der Querschnittsansicht der Figur 7 ist zwischen den Filterelementen in der Zwischenwand 13 jeweils eine Sollbruchstelle 22 vorgesehen.

Obwohl die vorliegende Erfindung anhand bevorzugter Ausführungsbeispiele näher erläutert wurde, ist sie nicht darauf beschränkt, sondern vielfältig modifizierbar. Es können andere als die dargestellten Geometrien für Filterelemente gewählt werden. Dabei können die Gegebenheiten beim Einbau des Filters berücksichtigt werden. Die genannten Materialien für das Filterelement oder die Gehäuse sind ebenfalls nur beispielhaft zu verstehen. Neben der dargestellten Anwendungsmöglichkeit als Luftfilter für Verbrennungskraftmaschinen, bzw. zur Filterung der Ansaugluft, können die vorgeschlagenen Filterelemente, Aufnahmeeinrichtungen und Filteranordnungen auch anderweitig verwendet werden. Ebenfalls sind die Filtermaterialien wie Filtervlies austauschbar.

## Patentansprüche

1. Filterelemente (1) mit einem Fußabschnitt (2) und einem Endabschnitt (3), wobei zwischen dem Fußabschnitt (2) und dem Endabschnitt (3) ein schlauchförmiger Innenraum (6) von einem fluiddurchlässigen Filtermaterial (4) umschlossen ist, der Fußabschnitt (2) eine Filterelementöffnung (5) zum Ein- und/ oder Ausströmen von Fluid und Kopplungsmitteln zum fluiddichten Ankoppeln des Filterelements (1) an eine Trägerplatte (13) mit einer geeigneten Trägeröffnung (18) aufweist, wobei der Fußabschnitt (2) und/oder die Kopplungsmittel derart ausgestaltet sind, dass das Filterelement (1) bei Vorliegen einer externen auf das Filterelemente (1) wirkenden Kraft (K) in eine vorgegebene Richtung (R) abgeknickt wird, wobei das Filterelement (1) eine Längsachse (S) aufweist und der Fußabschnitt (2) mit der Längsachse (S) einen Winkel (α) zwischen 5 Grad und 45 Grad aufweist.

2. Filterelement (1) nach Anspruch 1, wobei Stützmittel (5) zum Stabilisieren des Filtermaterials (4) vorgesehen sind.

3. Filterelement (1) nach Anspruch 2, wobei die Stützmittel (5) im Innenraum des Filterelements (1) vorgesehen sind und gerüstartige Streben (5A, 5B) aufweisen.

4. Filterelement (1) nach einem der Ansprüche 1- 3, wobei der Fuß- (2) und/ oder der Endabschnitt (3) flexibles Kunststoffmaterial, insbesondere PUR-Schaum, Silikon und/oder ein thermoplastisches Elastomer, aufweisen.

5. Filterelement (1) nach einem der Ansprüche 1 - 4, wobei der Endabschnitt (3) tropfenförmig oder halbkugelförmig, insbesondere in der Art eines Klöpperbodens, ausgestaltet ist.

6. Filterelement (1) nach einem der Ansprüche 1 - 5, wobei die Kopplungsmittel einen Schnapp-, Bajonett-, und/oder Schraubverschluss zum dichtschlüssigen Verbinden mit der Trägerplatte (13) aufweist.

7. Filteranordnung (12) in einem Motorraum mit mindestens einem Filterelement (1) nach einem der Ansprüche 1-6 und einer Aufnahmeeinrichtung für mindestens das Filterelement (1) mit einer Zwischenwand (13), welche geeignet ist, mindestens das daran angekoppelte Filterelement (1) derart aufzunehmen, dass eine Oberfläche der Zwischenwand (13) und des Filterelements (1) eine geschlossene Grenzfläche zwischen einem Rohfluidbereich (19) und einem Reinfluidbereich (20) bilden, wobei die Zwischenwand (13) mindestens eine Sollbruchstelle (21, 22) aufweist.

8. Filteranordnung (12) nach Anspruch 7, wobei die Sollbruchstelle (21, 22) derart ausgeführt ist, dass die Zwischenwand (13) vorgegebenen Standardbetriebsbedingungen einer Druckdifferenz zwischen dem Rohfluidbereich (19) und dem Reinfluidbereich (20) widersteht.

9. Filteranordnung (12) nach einem der Ansprüche 7 oder 8, wobei die Zwischenwand (13) ein flexibles Material aufweist.

10. Filteranordnung (12) nach einem der Ansprüche 7-9, wobei die Zwischenwand (13) und eine Wandung eines Aufnahmekörpers (14) der Aufnahmeeinrichtung derart ausgeführt sind, dass mindestens ein Filterelement zwischen der Zwischenwand und der Wandung dichtschlüssig einspannbar ist.

11. Filteranordnung (12) nach einem der Ansprüche 7-10, wobei die Aufnahmeeinrichtung einen Aufnahmekörper (14) und eine Abdeckhaube (15) aufweist, wobei der Reinluftbereich (20) ein Volumen zwischen der Grenzfläche und einer Wandung des Aufnahmekörpers (14) umfasst.

12. Filteranordnung (12) nach Anspruch 11, wobei der Aufnahmekörper (14), die Zwischenwand (13) und/oder die Haube (15) ein flexibles Material aufweisen.

13. Fliteranordnung (12) nach einem der Ansprüche 7-12, wobei die Aufnahmeeinrichtung derart ausgestaltet ist, dass die Aufnahmeeinrichtung auf einen Druck oder eine Kraft von außen durch Bersten der Sollbruchstellen das von ihr eingenommenen Volumen um ein vorgegebenes Maß freigibt.

14. Fifteranerdnung (12) nach einem der Ansprüche 7-13, wobei die Aufnahmeeinrichtung geeignet ist, schlauchförmige, kegel- oder kegelstumpfförmige Filterelemente (1, 100, 200) aufzunehmen.

## Claims

1. Filter element (1) with a foot portion (2) and an end portion (3), wherein between the foot portion (2) and the end portion (3) a hose-shaped interior space (6) is enclosed by a fluid-permeable filter material (4), the foot portion (2) having a filter element opening (5) for the inflow and/or outflow of fluid and coupling means for a fluid-tight coupling of the filter element (1) to a support plate (13) with a suitable support opening (18), wherein the foot portion (2) and/or the coupling means are designed in such a way that the filter element (1), in the case of an external force (K) acting upon the filter element (1), is bent in a predefined direction (R), wherein the filter element (1) features a longitudinal axis (S) and the foot portion (2) with the longitudinal axis (S) features an angle (α) between 5 degrees and 45 degrees.

2. Filter element (1) according to claim 1, wherein supporting means (5) are provided for stabilizing the filter material (4).

3. Filter element (1) according to claim 2, wherein the supporting means (5) are provided in the interior space of the filter element (1) and feature frame-like struts (5A, 5B).

4. Filter element (1) according to one of the claims 1 to 3, wherein the foot (2) and/or end portion (3) feature a flexible synthetic material, in particular PUR foam, silicone and/or a thermoplastic elastomer.

5. Filter element (1) according to one of the claims 1 to 4, wherein the end portion (3) has a drop-shaped or hemispherical design in particular in the manner of a dished head.

6. Filter element (1) according to one of the claims 1 to 5, wherein the coupling means feature a spring lock, a bayonet lock and/or a screw cap for a tight connection with the support plate (13).

7. Filter arrangement (12) in an engine compartment with at least one filter element (1) according to one of the claims 1 to 6 and a receiving device for at least the filter element (1) with an intermediate wall (13) suitable to receive at least the filter element (1) coupled thereto in such a way that a surface of the intermediate wall (13) and of the filter element (1) form a closed boundary surface between a raw fluid area (19) and a clean fluid area (20), wherein the intermediate wall (13) features at least one predetermined breaking point (21, 22).

8. Filter arrangement (12) according to claim 7, wherein the predetermined breaking point (21, 22) has been designed in such a way that the intermediate wall (13) resists a pressure difference between the raw fluid area (19) and the clean fluid area (20) under predefined standard operating conditions.

9. Filter arrangement (12) according to one of the claims 7 or 8, wherein the intermediate wall (13) features a resilient material.

10. Filter arrangement (12) according to one of the claims 7 to 9, wherein the intermediate wall (13) and a wall of a receiving body (14) of the receiving device are designed in such a way that at least one filter element can be tightly mounted between the intermediate wall and the wall.

11. Filter arrangement (12) according to one of the claims 7 to 10, wherein the receiving device features a receiving body (14) and a cover hood (15), wherein the clean air area (20) comprises a volume between the boundary surface and a wall of the receiving body (14).

12. Filter arrangement (12) according to claim 11, wherein the receiving body (14), the intermediate wall (13) and/or the hood (15) feature a resilient material.

13. Filter arrangement (12) according to one of the claims 7 to 12, wherein the receiving device is designed in such a way that the receiving device, due to a pressure or a force from outside, releases the volume occupied by it by a predetermined amount by bursting the predetermined breaking points.

14. Filter arrangement (12) according to one of the claims 7 to 13, wherein the receiving device is suitable to receive hose-shaped, cone-shaped or frustro-concial filter elements (1, 100, 200).

## Revendications

1. Élément filtrant (1) avec une section de base (2) et une section d'extrémité (3), un espace intérieur tubulaire (6) étant enrobé d'un matériau filtrant (4) perméable aux fluides entre la section de base (2) et la section d'extrémité (3), la section de base (2) comportant une ouverture d'élément filtrant (5) destinée à faire entrer et/ou sortir du fluide et des moyens de couplage permettant de réaliser un assemblage étanche aux fluides de l'élément filtrant (1) avec une plaque de support (13) dotée d'une ouverture de support (18), la section de base (2) et/ou les moyens de couplage étant conçus de telle sorte que l'élément filtrant (1) se coude dans une direction définie (R) lorsqu'une force externe (K) est exercée sur l'élément filtrant (1), l'élément filtrant (1) étant pourvu d'un axe longitudinal (S) et la section de base (2) présentant, avec son axe longitudinal (S), un angle (α) compris entre 5 degrés et 45 degrés.

2. Élément filtrant (1) selon la revendication 1, des éléments de soutien (5) étant prévus pour stabiliser le matériau filtrant (4).

3. Élément filtrant (1) selon la revendication 2, les éléments de soutien (5) étant prévus dans l'espace intérieur de l'élément filtrant (1) et étant pourvus d'entretoises en forme d'armature (5A, 5B).

4. Élément filtrant (1) selon l'une des revendications 1 et 3, la section de base (2) et/ou la section d'extrémité (3) comportant une matière plastique flexible, en particulier de la mousse PUR, de la silicone et/ou un élastomère thermoplastique.

5. Élément filtrant (1) selon l'une des revendications 1 à 4, la section d'extrémité (3) étant conçue en forme de goutte ou d'hémisphère, notamment sous forme de fond bombé.

6. Élément filtrant (1) selon l'une des revendications 1 à 5, les moyens de couplage présentant une fermeture à ressort, à baïonnette et/ou à vis permettant de réaliser un assemblage étanche aux fluides avec la plaque de support (13).

7. Agencement de filtre (12) dans un compartiment moteur avec au moins un élément filtrant (1) selon l'une des revendications 1 à 6 et avec un dispositif de réception pour au moins l'élément filtrant (1), au moins au nombre d'un, avec une paroi intermédiaire (13) appropriée à réceptionner au moins l'élément filtrant (1) y étant assemblé de sorte qu'une surface de la paroi intermédiaire (13) et une surface de l'élément filtrant (1) forment une surface de séparation fermée entre une zone à fluide brut (19) et une zone à fluide pur (20), la paroi intermédiaire (13) comportant au moins un point de rupture (21, 22).

8. Agencement de filtre (12) selon la revendication 7, le point de rupture (21, 22) étant exécuté de telle manière que la paroi intermédiaire (13), dans des conditions d'exploitation standard prédéfinies, résiste à une différence de pression entre la zone à fluide brut (19) et la zone à fluide pur (20).

9. Agencement de filtre (12) selon l'une des revendications 7 ou 8, la paroi intermédiaire (13) comportant une matière flexible.

10. Agencement de filtre (12) selon l'une des revendications 7 à 9, la paroi intermédiaire (13) et une paroi d'un corps de réception (14) du dispositif de réception étant exécutées de telle manière qu'il soit possible de monter de manière étanche au moins un élément filtrant entre la paroi intermédiaire et la paroi.

11. Agencement de filtre (12) selon l'une des revendications 7 à 10, le dispositif de réception présentant un corps de réception (14) et un capot (15), la zone d'air pur (20) comprenant un volume s'étendant entre la surface de séparation et une paroi du corps de réception (14).

12. Agencement de filtre (12) selon la revendication 11, le corps de réception (14), la paroi intermédiaire (13) et/ou le capot (15) comportant une matière flexible.

13. Agencement de filtre (12) selon l'une des revendications 7 à 12, le dispositif de réception étant conçu de telle manière que le dispositif de réception libère d'une valeur prédéfinie le volume qu'il occupe, sous l'effet d'une pression ou d'une force exercée de l'extérieur, en rompant les points de rupture.

14. Agencement de filtre (12) selon l'une des revendications 7 à 13, le dispositif de réception étant approprié à réceptionner des éléments filtrants tubulaires, coniques ou en forme de cône tronqué (1, 100, 200).
